# EUROPEAN PATENT SPECIFICATION

(11) **EP 3 544 254 B1**
(45) Date of publication and mention of the grant of the patent: **11.09.2024**
(21) Application number: 18163616.8
(22) Date of filing: 23.03.2018
(51) Int. Cl.: H04L 9/40, H04L 65/1016

(54) **IMS APPLICATION SERVER OVERLOAD PROTECTION**
IMS-ANWENDUNGSSERVER-ÜBERLASTSCHUTZ
PROTECTION CONTRE LA SURCHARGE DE SERVEURS D'APPLICATION D'IMS

(43) Date of publication of application: 25.09.2019
(73) Proprietor: Deutsche Telekom AG, 53113 Bonn (DE)
(72) Inventor: SCHMIDT, Holger, 41844 Wegberg (DE); PURKOP, Thomas, 40489 Düsseldorf (DE); MOHANDAS, Rohith, 53175 Bonn (DE)
(74) Representative: Vossius & Partner Patentanwälte Rechtsanwälte mbB

(56) References cited:
- EP-A1- 3 110 103
- EP-A2- 2 709 291
- US-A1- 2010 100 614
- US-B2- 8 582 567
- ANAHITA GOUYA ET AL: "Service Invocation Issues within the IP Multimedia Subsystem", NETWORKING AND SERVICES, 2007. ICNS. THIRD INTERNATIONAL CONFERENCE ON, IEEE, PI, 1 June 2007 (2007-06-01), pages 33 - 33, XP031207484, ISBN: 978-0-7695-2858-9

## Description

The invention refers to a control system for controlling requests to contact an end point of a network, particularly of an Internet Protocol Multimedia Subsystem network. The invention also refers to a method for use in a control system.

Direct attacks on Voice over Internet Protocol service (VoIP) to induce Denial of Services (DOS) create service impacting issues by overloading a network element of an internet protocol multimedia subsystem (IMS). A network element may be, for instance, user equipment (UE) or an IMS Application Server (AS), e.g. the multimedia telephony service application server (MMtel AS). Due to DOS attacks, available resources corresponding to occupancy rates of these application servers are consumed. Thus, regular traffic cannot be handled by the application servers in this case. Regulation of regular traffic may be partially or completely impossible for application servers being affected by attacks. Usually, each IMS network entity has means to protect itself from overload scenarios in order to provide services although it suffers attacks.

Some attack pattern affects the CS PLMN, Fixed Network IMS and Mobile Network IMS. The abbreviation CS PLMN refers to a circuit service of the public land mobile network

Some attacks are caused by a single user or user equipment of another network that is massively calling a subscriber of a network service provider. A Subscriber is an entity (comprising one or more users) that is engaged in a subscription with a service provider. The subscriber is allowed to subscribe and unsubscribe services, to register a user or a list of user authorized to enjoy these services, and also to set the limits relative to the use that users make of these services.

The calls to the attacked subscriber enter the network via so-called inter-operator interconnections. Several hundreds of CAPS (call attempts per second) are possible with varying attack durations, from several seconds to even several minutes. It is problematic that these DOS attacks are not blocked by protection means at the interconnection border even in the case of several hundred of CAPS. Protection against those attacks cannot be provided at this stage due to elements at the interconnection border do not survey traffic on a single end-user/UE level. Rather, network nodes at the network border provide protection on an interconnection point level. Several hundreds of CAPS are not critical on this level, because an interconnection handles a higher degree of traffic volume/CAPS, which is in a degree of some tens or hundreds of thousands. This means that they have load limiting capabilities taking into account the traffic being transmitted within the interconnection as a whole.

The attacker uses appropriate user equipment in order to provide a critical attack pattern. For example, a softphone allows creating critical values for CAPS. A possible scenario for the attacker is the scenario of a "car dealer": The attacker provides, as an end user, a car selling offer in an internet portal. The attacker wants to block the destination number as given within the internet portal for a defined period of time so that nobody else can place an offer and can make the deal. The attacker uses one of some numbers from which he can choose. Frequently, the numbers vary. Usually, callbacks to these numbers are not answered.

Actually, interconnection nodes limit the number of calls/CAPS entering the network. However, these nodes are not appropriate for protection based on per calling/called subscriber level. Furthermore, several interconnection points exist in a network. Thus, the aforementioned DOS attack pattern cannot be detected and no countermeasures are possible since the attack pattern does not exceed the interface thresholds.

Most network elements limit the traffic load/CAPS based on total traffic values corresponding to the occupancy rate of the network element. For example, if the occupancy rate corresponds to 80% of the node capacity (interface throughput, CPU, RAM), the network element will limit the traffic load. However, the aforementioned DOS attack does not exceed the corresponding thresholds so that the aforementioned attack scenario cannot be detected and no countermeasures are possible at this stage.

Some network elements provide Session Initiation Protocol (SIP) request throttling capabilities on a SIP method type level. However, this feature is only available on a per user basis on the Proxy Call Session Control Function (P-CSCF) corresponding to a User-to-Network Interface. Other network elements do not provide any user specific throttling capabilities. Thus, the aforementioned DOS attack countermeasures cannot be used for protecting an application server in the terminating use case; the P-CSCF is passed after the application server.

Even, network elements that are user/subscriber aware use common resources like processing queues which are vulnerable to the aforementioned DOS attack. These resources get stuck resulting in that the targeted subscriber cannot be serviced properly. Even other subscribers are impacted: It may be impossible that they are serviced or they experience service degradation, as well.

US 2010/100614 A1; EP 2 709 291 A2; Gouya et al., "Service Invocation Issues within the IP Multimedia Subsystem," International Conference on Networking and Services (ICNS '07), 2007, pp. 33-33; and US 8,582,567 B2, as well as EP3 110 103 A1, are documents concerning related art.

The objective of the present invention is to provide means which allow protecting application servers, and particularly end points, against overload and DoS attacks more effectively.

The invention is specified by the independent claims. Preferred embodiments are defined in the dependent claims. In the following description, although numerous features may be designated as optional, it is nevertheless acknowledged that all features comprised in the independent claims are not to be read as optional.

According to the invention there is provided a control system for controlling requests to contact an end point of a network, particularly of an Internet Protocol Multimedia Subsystem network, comprising receiving means being configured to receive requests from a sender via the network to contact an end point, control means being configured to limit a number of requests to contact the end point according to initial filter criteria, iFC, defining a predetermined number of allowed requests in a predetermined period of time T1, and transmitting means being configured to transmit a request to an application server if the request fulfills the iFC, wherein the application server is configured to host at least one connection to the at least one end point.

Furthermore, according to the invention there is provided a method for use in a control system, in particular a control system according to any one of the preceding claims, for controlling requests to contact an end point of a network, particularly of an Internet Protocol Multimedia Subsystem network, comprising receiving requests from a sender via the network to contact an end point, limiting a number of requests to contact the end point according to iFC, defining a predetermined number of allowed requests in a predetermined period of time T1, and transmitting a request to an application server if the request fulfills the iFC, wherein the application server is configured to host at least one connection to the at least one end point.

The invention has the advantage that it allows protecting all kind of application servers that are invoked by the control means, particularly by the Service-Call Session Control Function (S-CSCF) against overload. For example, the MMTel application server that is used by GSMA IR.92 (V. 11.0) for VoLTE speech communication is protected against attack patterns. The abbreviation VoLTE means Voice-over-IP over LTE. VoLTE is defined by the IR.88 LTE and EPC roaming guidelines V1 6.0. Any IMS service that is provided by an application server can be protected, including Rich Communication Suite (RCS) services as defined by the GSMA RCS/joyn specifications, SMS over IMS, Push-to-Talk over Cellular, etc.

The invention allows adapting protection means corresponding to the control means, and particularly the CSCF, to individual properties of application servers, i.e. individual maximum occupancy rates and capacities of the application servers are taken into account. The method and the system according to the invention can be used in any IMS environment, e.g. in Mobile Network IMS, Fixed Network IMS and in Business IMS Networks. The invention is based on the iFC (initial Filter Criteria) of the control means, particularly comprised by the CSCF, more preferably comprised by the S-CSCF.

The system and the method according to the invention are granular, which means that they provide protection on a per served user basis, per IMS session case (originating, terminating, etc.) basis, per SIP method, per IMS service on basis or combinations thereof.

The method and the system according to the invention are, for example, applicable in the case that invocation of an IMS application server is done via iFC according to the technical specifications 3GPP TS 23.228, 3GPP TS 23.216, 3GPP TS 24.229, 3GPP TS 29.228 and 3GPP TS 29.229 V14.2.0, for example according to the versions 3GPP TS 23.228 V15.1.0 (2017-12), 3GPP TS 23.216 V15.1.0 (2017-12), 3GPP TS 24.229 V15.1.0 (2017-12), 3GPP TS 29.228 V14.5.0 (2017-12) and 3GPP TS 29.229 V14.2.0 (2017-06).

According to the invention it is taken into account that an application server, such as the MMtel application server, is configured to handle service requests on a user/destination number basis. Particularly, the system and the method take into account that an application server can cope much better with attack patterns than interconnection border elements on a user-aware level.

The invention provides that, for example within the Mobile IMS, in which the used product has a plurality of input queues which are shared by a plurality of users/subscribers that one user's requests cannot impact the service of other users. In other words, it can be avoided that one user gets hundreds of terminating call attempts inducing that the shared queue is filled up and due to limited processing capabilities.

In particular, it can be avoided that such an attack results in that the more the queue is filled, the higher is the resulting request processing delay because of FIFO and that, in particular delays up to 50s in the Mobile IMS do not occur.

Also, it will be avoided that a Call Setup Time (CST) of other subscribers will be increased and that normal callers without sending a critical attack pattern give up calls.

The incident may be avoided that the S-CSCF determines that the application server has service problems or is out of service. This may result in that the S-CSCF blacklists the application server triggering a failover to a redundant application servers. Therefore, toggling and service issues in case the service restoration does not cover this case properly can be avoided, as well.

Preferably, the application server is configured to provide access to the at least one end point via at least one of a plurality of queues, wherein particularly the at least one queue of the plurality of queues is shared by a plurality of the end points, wherein particularly the iFC defines an occupancy rate of the application server, wherein particularly the occupancy rate of the application server takes into account a number of sessions in the at least one of the plurality of queues.

Preferably, in case that from a certain or arbitrary sender the number of requests in the predetermined period of time T1 exceeds the predetermined number of requests, the control means, particularly the CSCF, is configured to reject access to the application server to the sender. This allows reducing processing capacities: In the case that the control means recognizes a critical attack pattern it does not need to check occupancy rates of any application server.

Preferably, in case that the predetermined number of requests in the predetermined period of time T1 is exceeded, the control means, particularly the CSCF, is configured to send a special response back to the sender of the request. Preferably, the special response comprises at least one response code, wherein the control means, CSCF, is configured to send the at least one response code to the sender for rejecting the request, wherein the at least one response code is defined by at least one parameter of the iFC.

Particularly, the at least one parameter of the iFC relates to a trigger target address of the application server, and wherein the trigger target address of the application server is invoked when iFC Service Point Triggers, SPTs, match with the incoming request from the sender.

Preferably, the control means, more preferably the CSCF, is configured to reject access for another predetermined period of time T2, wherein the other predetermined period of time T2 is equal to or different from, particularly longer than, the predetermined period of time T1.

Preferably, the iFC comprises an invocation-count limit and/or an invocation window and/or an invocation-rate.

Preferably, the control means, more preferably the CSCF, is configured to limit a number of requests to contact the end point according to the iFC comprising at least one parameter specifying application server destination addresses that are resolved via a Domain Name System. The Domain Name System (DNS) translates memorized domain names to the numerical IP addresses needed for locating and identifying end points with underlying network protocols. The control means defines application server addresses in the iFC. The end points are contacted via the application servers so that by defining the application server addresses in the iFC, requests to end points being permitted to be contacted are limited, too.

Preferably, a precursor means being configured to drop or to reject all requests of the sender is provided, wherein the precursor means is connected to the network, wherein the precursor means is located closer to the sender than the application server, wherein particularly the precursor means is located at a border of a network of an operator.

Preferably, the precursor means is configured to drop or to reject all requests of the sender to contact the end point for which the sender sent a plurality of requests succeeding the number of requests to contact the end point according to the iFC limits.

Preferably, the precursor means is configured to drop or to reject all requests according to at least one criterion which is defined by the at least one signaling information element.

Preferably, the at least one signaling information element is comprised in the at least one response code, in particular in a header field of the at least one response code.

Preferably, the method comprises accordingly defined processing steps to implement the afore-mentioned preferable features of the system as described before.

### DETAILED DESCRIPTION OF EMBODIMENTS

- FIG. 1: is a conceptual view of an embodiment of the control system according to the invention and
- FIG. 2: is a more detailed conceptual view of the embodiment according to FIG. 1.

### TABLE 1 Exemplary embodiment of iFC.

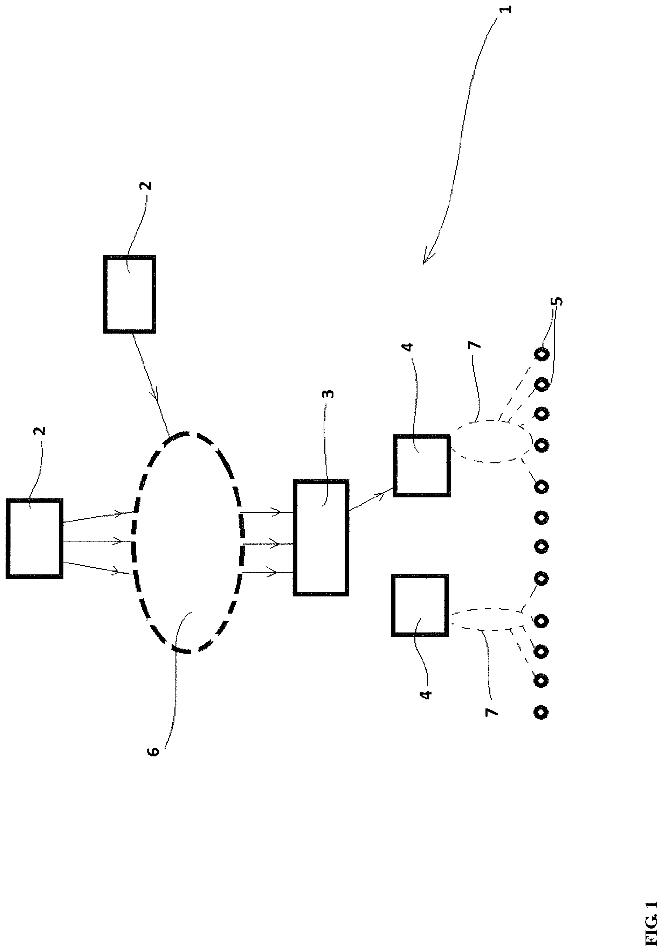

Figure 1 depicts a conceptual view of the control system 1 according to the invention. The control system 1 is configured to control requests to contact an end point 5 being connected to a network 6. Requests are sent from sender 2 via the network 6.

The control system 1 comprises at least one control means 3, which is particularly a Call Session Control Function (CSCF), more preferably a Service-Call Session Control Function (S-CSCF). The control means 3 is configured to administer access to at least one application server 4. The application server 4 is configured to host at least one connection to the at least one end point 5. That is, the application server 4 controls access to the end points 5. Access to end points 5 is provided by queues 7. Preferably, at least one end point 5 can be accessed by a queue 7. More preferably, a plurality of the end points 5 share the at least one queue 7.

The control means 3 is configured to control requests from senders 2 to contact end points 5. That is, the control means 3 is configured to transmit a limited number of requests to the end point 5 for which the sender 2 sends the requests. Preferably, configuration of the control means 3 is defined by initial Filter criteria, iFC.

IFCs trigger service point triggers (SPTs) in order to send session initiation protocol requests (SIP requests) to a requested application server 4. The iFC may contain the following information: address of the application server 4, sequence of filter criteria, trigger points composed of service point triggers, service point triggers chained through Boolean operators, default handling and optional info to be added to the message body.

The iFC determines a predetermined number of allowed requests in a predetermined period of time T1. The iFC may address an individual application server 4. An end-user corresponding to an end-point 5 may be subscribed to multiple services provided by different application servers 4. For this, a plurality of iFC may be provided by the control means 3.

Preferably, iFC defines an occupancy rate of each of the application server 4, wherein the occupancy rate takes into account a number of sessions in the at least one of the plurality of queues 7 which is established by the application server 4. In other words, the control means 3 takes into account the numbers of sessions which each of the application servers 4 has established. The control means 3 may select an appropriate application server 4 for which the occupancy rate has not exceeded a predetermined rate of invocations.

The system 1 comprises besides the control means 3 at least one receiving means and at least one transmitting means which are not depicted in Figure 1. The receiving means is configured to receive requests from the senders 2 via the network 6 to contact an end point 5. The transmitting means is configured to transmit a request to the application server 4 if the request fulfills the iFC, wherein the application server 4 is configured to host at least one connection to the at least one end point 5.

When the receiving means receives a request from the sender 2 via the network 6 to contact an end point 5, the control means 3 checks the number of requests of this sender 2 in the period of time T1. That is, the control means 3 checks if the current request fulfills the iFC, particularly taking into account a history of requests of this sender 2. In the case that the number of requests is less than a predetermined number in the predetermined period of time T1, the transmitting means transmits the requests to an application server 4.

When the receiving means receives a request from the sender 2 via the network 6 to contact an end point 5, the control means 3 checks the number of requests of this sender 2 in the period of time T1. In the case that the control means 3 determines after checking if the request fulfills the iFC that the iFC is not fulfilled, the transmitting means is configured not to transmit the request to any of the application servers 4.

The transmitting means and/or the control means 3 may be configured to drop the request of the sender 2. That means that the request is not forwarded to be received by the end point 5 and that the control means 3 and/or the transmitting means does not communicate with the sender 2. Alternatively, the transmitting means and/or the control means 3 may be configured to reject the request of the sender 2. That means that the request is not forwarded to be received by an end point 5 and that the control means 3 and/or the transmitting means communicates with the sender 2 that the request of the sender 2 is rejected. The activity of rejecting may comprise answering negatively, e.g. with an error response, such as a code 500 which corresponds to the incident of an internal error within a server.

Preferably, the control means 3 and/or the application server 4 is configured to reject the session initiation protocol request with a final response/error code, e.g. 500, 486, 600, 603. The application server 4 and/or the control means 3 may be configured to use the CSCF, more preferably the S-CSCF, in this case.

Preferably, in case that from a certain or arbitrary sender 2 the number of requests in the predetermined period of time T1 exceeds the predetermined number of requests, the control means 3, particularly the CSCF, is configured to reject access to the application server 4 to the sender 2. A certain sender 2 is a sender 2 which has already been identified by the control means 3 and/or by any other means of the system 1, for example when sending a request in a previous time. An arbitrary sender may be any sender 2 which is not known to the control means 3 and/or to any other means of the system 1.

Preferably, in case that the predetermined number of requests in the predetermined period of time T1 is exceeded, the control means 3, more preferably the CSCF, is configured to send a special response back to the sender 2 of the request. Particularly, the special response comprises at least one response code, wherein the control means 3, particularly the CSCF, is configured to send the at least one response code to the sender 2 for rejecting the request, wherein the at least one response code is defined by at least one parameter of the iFC.

Preferably, the at least one parameter of the iFC relates to a trigger target address of the application server 4, wherein the trigger target address of the application server 4 is invoked when iFC service point triggers match with the incoming request from the sender 2. Preferably, one iFC comprises several service point triggers.

The following service point triggers may be possible: initial service point trigger methods (INVITE, OPTIONS, etc.), registration type, existence of specific headers, content of specific headers or request-uniform resource identifies (URI), or identification of the user, that is mobile-originated or mobile-terminated and session description information. Service point triggers may be logically combined as follows: INVITE and speech service and terminating call.

Preferably, the control means 3, more preferably the CSCF, is configured to reject access for another predetermined period of time T2. The other predetermined period of time T2 is particularly equal to or different from, more particularly longer than, the predetermined period of time T1. Most preferably, the predetermined period of time T2 is determined based on a recognized duration of identified critical attack patterns.

Preferably, the iFC comprises an invocation-count limit and/or an invocation window and/or an invocation-rate. The invocation-count limit may take into account how many times the application server 4 was invoked in order to forward requests of different senders 2. The invocation window may be the predetermined period of time T1 in which the control means 3 receives requests from one or a plurality of senders 2 to contact an end point 5. Additionally or alternatively, the invocation window may be the predetermined period of time T1 in which the control means 3 receives requests from one or a plurality of senders 2 to contact a plurality of end points 5, wherein access to the end points 5 may be given via one application server 4. The invocation rate may be a predetermined number defining how many times the iFC invokes the application server 4 after having received the request from the sender 2 to contact the end point 5.

Particularly, the control means 3, more particularly the CSCF, is configured to limit a number of requests to contact the end point 5 according to the iFC comprising at least one parameter specifying application server destination addresses that are resolved via a Domain Name System.

Preferably, the system 1 comprises a precursor means being configured to drop or to reject all requests of the sender 2. The precursor means is not depicted in the figures. The precursor means is connected to the network 6 and is located closer to the sender 2 than the application server 4. More preferably, the precursor means is located at a border 8 of a network 6 of an operator. That is, a border 8 of a network 6 of an operator is a boundary between the networks of different service providers.

Particularly, the precursor means is configured to drop or to reject all requests of the sender 2 to contact the end point 5 for which the sender 2 sent a plurality of requests succeeding the number of requests to contact the end point 5 according to limitations of the iFC.

Preferably, the precursor means is configured to drop or to reject all requests according to at least one criterion which is defined by the at least one signaling information element. Preferably, the at least one signaling information element is comprised in the at least one response code, in particular in a header field of the at least one response code.

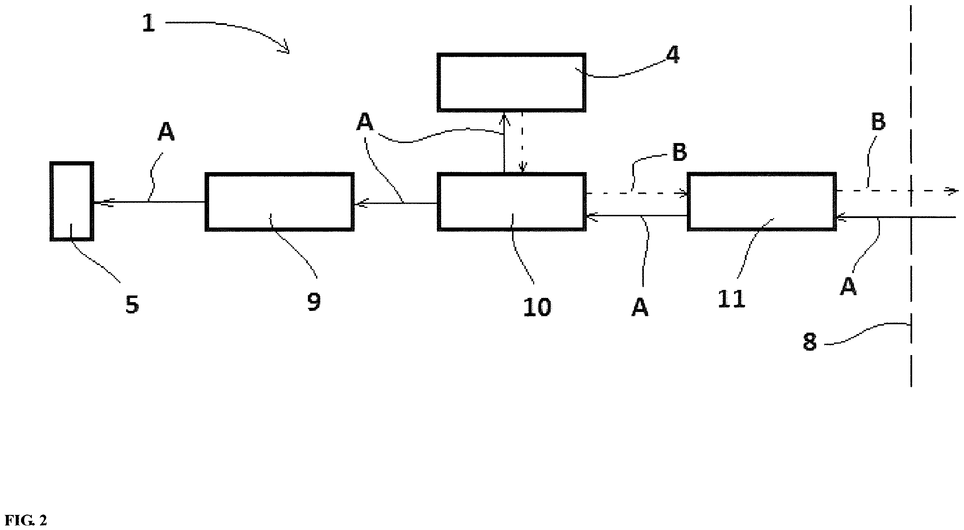

A more detailed configuration of the system 1 is shown in Figure 2.

Preferably, the control means 3 comprises a Service-Call Session Control Function (S-CSCF) 10. The system 1 comprises, besides the aforementioned components, preferably a Proxy Call Session Control Function (P-CSCF) 9 and an Interconnect Border Control Function (IBCF) 11. Particularly, the IBCF 11 is located closer to the border 8 of the network 6 than other components of the system 1. In the case that the precursor means is provided, this precursor means may be located closer to the border 8 than the IBCF 11.

The control means 3, which is the S-CSCF 10, in this case, is configured to execute iFCs defining a limitation of the invocation rate of the application server 4. Preferably, the control means 3 frequently checks the occupancy rate of the application server 4, or at least checks the occupancy rate of the application server 4 when the control means 3 receives a request of the sender 2 to contact the end point 5 via the application server 4.

The IBCF 11 receives a request from a sender 2 which is marked by A in Figure 2. This request may be "INVITE UE1", for example. The UE1 may, e.g., correspond to the end point 5 in Figure 2.

According to a first scenario, the occupancy rate of the application server 4 is low, for example 40 % of a capacity in the queues being controlled by the application server 4 is currently in use. The control means 3 which receives from the IBCF 11 the request A, forwards for this reason the request to the P-CSCF 9 which forwards the request A to the end point 5, which is the LTE1.

According to a second scenario, the occupancy rate of the application server 4 high, for example 80 % of the capacity in the queues the application server 4 administers is occupied. The control means 3 which receives from the IBCF 11 the request A, does not forward the request to the P-CSCF 9 or to the application server 4 but it drops the request or it forwards a response B to the sender 2 via the IBCF 11. For a terminating call the application server 4 is always invoked before the P-CSCF. The response B may be an error code 603, for example.

Preferably, the iFC consists of rules that determine when an initial session initiation protocol request is routed to the application server 4 that is determined by the trigger target address. The application server 4 may provide additional services, e.g. Call Diversion or Message Storing. In Table 1, an example for iFC is provided.

The trigger target address of the application server 4 that is invoked when a Service Point Trigger of the iFC matches with an incoming SIP request can be seen in the first row of Table 1.

According to this exemplary embodiment of the system 1, the iFCs are extended to be configured to control a number of invocations of the application server 4 within the predetermined period of time T1, i.e. its rate. Preferably, the number of invocations is controlled by defining new proprietary parameters of the trigger target address of the application server 4. Accordingly, the parameters are defined such that, the control means 3, preferably the S-CSCF, is configured not to invoke the application server 4 in case that the occupancy rate of the application server 4, comprising the invocation rate of the application server 4 is exceeded.

Preferably, the S-CSCF is configured to reject the session initiation protocol request with a final response or error code, e.g. 500, 486, 600, 603.

**TABLE 1: Exemplary embodiment of iFC.**

| | |
|---|---|
| **Application Server (Trigger Target Address, NAPTR) (Test stage)** | tas.m2mims.telekom.de |
| **URI parameter of the Trigger Target Address** | type=mmtel |
| **Note** | General Information about possible Session Cases, TS 29.228: Originating (0), Originating_Unregistered (3), Terminating_Registered (1), Terminating_Unregistered (2), Originating_CDIV (4) |
| | No Originating_Unregistred case is needed as MMtel AS does not create out of the blue calls for any scenario |
| | In case the SCC-AS is enabled in the TAS the URI parameter must be change to: type=scc_mmtel |
| **AS DefaultHandling** | SESSION_TERMINATED |
| **Include RegisterRequest/Response** | no |
| **iFC Trigger Point (1:N SPT)** | Accept-Contact: urn%3Aurn-7%3A3gpp-service.ims.icsi.mmtel |
| **Session Case (including RegistrationType if applicable)** | ORIGINATING REGISTERED (0) |
| **Use Case** | Orig Invite to MMTEL-AS |
| | For providing CAG feature this session case must be handled by MMTel AS |
| **SPT, Method** | INVITE |
| **iFC Name** | VoLTE_INVITE_Orig_TAS |
| **SiFC** | yes |
| **Trigger Priority** | 1021 |
| **SiFC set ID** | 1001 |
| **iFC ID** | 0 (VoLTE) |

Preferably, the new parameters are added to the address of the application server 4 that is put into a SIP route header in the same way in which it is done with other parameters that are transferred to the S-CSCF and the application server 4. A possible example for such a SIP route header may be:
Route: <sip: tas.m2mims.telekom.de;lr;type=mmtel>

Preferably, the iFCs are part of a subscriber's user profile and/or a service profile that is downloaded from a Home Subscriber Server (HSS) during IMS registration of the user.

Particularly, the application server 4 is configured to change the iFCs via a Sh interface. Preferably, the S-CSCF is configured to receive the new parameters by downloading the iFCs and the S-CSCF is configured to apply the iFCs.

As an example, assuming that the following is set, invocation-count-limit=4, invocation-window=1 5s, the Route Header entry of the AS will look like this:
Route: sip:tas.m2mims.telekom.de;lr;type=mmtel; invocation-count-limit=4; invocation-window=1 5s

This will advise the S-CSCF for only allowing up to four executions of iFC and therefore four invocations of the application server 4 within the time period T1 which is 15s in the present case. The predefined time period T1 is a sliding or fixed time window. In case of more SIP requests enter the S-CSCF and result in an invocation of this application server 4, the S-CSCF will reject the request without invoking any application server 4.

Preferably, another trigger target address parameter with a defined final response code may be used by the S-CSCF when rejecting a request due to exceeding the iFC taking into account an invocation limit. This may be defined with the new parameter: response-code=603
Route: <sip: tas.m2mims.telekom.de;lr;type=mmtel; invocation-count-limit=4; invocation-window=15s ;response-code=603>

Preferably, the application server 4 receives these parameters as a part of its own Route header entry. However, it is not necessary that the application server 4 is appropriately configured to interpret these extensions. Rather, the application server 4 can simply ignore these extensions. In other words, the application server 4 does not need to implement any new functionality. That is, the system 1 according to the invention provides that the functionality of the S-CSCF is enhanced.

Preferably, the S-CSCF is configured to control the invocation rate of the application server 4 per an individual destination address as given in the SIP Request URI or to a header in an originating session case of the user equipment (UE), and/or and individual source address as given in the From header or P-Asserted-Identity header if present in the UE terminating session case.

Particularly, the S-CSCF is configured to apply the invocation limitation in total for application server destination addresses that are resolved via the Domain Name System (DNS). This results in considering alternative application server addresses altogether and limits the invocation rate for all of them in total.

The scope protected by the present disclosure should be construed by the accompanying claims.

### REFERENCE SIGNS LIST

- 1: system
- 2: sender
- 3: control means
- 4: application server
- 5: end point
- 6: network
- 7: queue
- 8: border of network of network provider
- 9: Proxy Call Session Control Function (P-CSCF)
- 10: Service-Call Session Control Function (S-CSCF)
- 11: Interconnect Border Control Function (IBCF)

- A: request
- B: response

## Claims

1. A control system (1) for controlling requests to contact an end point (5) of an Internet Protocol Multimedia Subsystem network comprising:
receiving means being configured to receive requests from a sender (2) via the network (6) to contact an end point (5);
control means being configured to limit a number of requests to contact the end point (5) according to initial filter criteria, iFC, defining a predetermined number of allowed requests in a predetermined period of time T1, and
transmitting means being configured to transmit a request to an application server (4) if the request fulfills the iFC, wherein the application server (4) is configured to host at least one connection to the at least one end point (5),
**characterized in that** the control means (3) is configured to limit a number of requests to contact the end point (5) according to the iFC comprising at least one parameter specifying application server (4) destination addresses that are resolved via a Domain Name System, and
thereby considering alternative application server (4) addresses altogether and limiting an invocation rate for all of them in total.

2. The system (1) according to claim 1,
wherein the application server (4) is configured to provide access to the at least one end point (5) via at least one of a plurality of queues (7),
wherein the at least one queue (7) of the plurality of queues (7) is shared by a plurality of the end points (5),
wherein the iFC defines an occupancy rate of the application server (4), and
wherein the occupancy rate of the application server (4) takes into account a number of sessions in the at least one of the plurality of queues (7).

3. The system (1) according to claim 1 or 2,
wherein in case that the number of requests, from the sender (2), in the predetermined period of time T1 exceeds the predetermined number of requests, the control means (3) is configured to reject access to the application server (4) to the sender (2).

4. The system (1) according to any of claims 1 to 3,
wherein in case that the predetermined number of requests in the predetermined period of time T1 is exceeded, the control means (3) is configured to send a special response back to the sender (2) of the request.

5. The system (1) according to claim 4,
wherein the special response comprises at least one response code,
wherein the control means (3) is configured to send the at least one response code to the sender (2) for rejecting the request, and
wherein the at least one response code is defined by at least one parameter of the iFC.

6. The system (1) according to claim 5,
wherein the at least one parameter of the iFC relates to a trigger target address of the application server (4), wherein the trigger target address of the application server (4) is invoked when iFC Service Point Triggers, SPTs, match with the incoming request from the sender (2).

7. The system (1) according to any of claims 1 to 6,
wherein the control means (3) is configured to reject access for another predetermined period of time T2, and
wherein the other predetermined period of time T2 is equal to or different from the predetermined period of time T1.

8. The system (1) according to any of claims 1 to 7,
wherein the iFC comprise an invocation-count limit and/or an invocation window and/or an invocation-rate.

9. The system (1) according to any of claims 1 to 8,
comprising a precursor means being configured to drop or to reject all requests of the sender (2),
wherein the precursor means is connected to the network (6).

10. The system (1) according to claim 9,
wherein the precursor means is configured to drop or to reject all requests of the sender (2) to contact the end point (5) for which the sender (2) sent a plurality of requests succeeding the number of requests to contact the end point (5) according to the iFC.

11. The system (1) according to claim 9 or 10,
wherein the precursor means is configured to drop or to reject all requests according to at least one criterion which is defined by the at least one signaling information element.

12. The system (1) according to claim 11,
wherein the at least one signaling information element is comprised in the at least one response code.

13. A method for use in a control system for controlling requests to contact an end point of an Internet Protocol Multimedia Subsystem network comprising:
receiving requests from a sender (2) via the network (6) to contact an end point (5);
limiting a number of requests to contact the end point (5) according to initial filter criteria, iFC, defining a predetermined number of allowed requests in a predetermined period of time T1, and
transmitting a request to an application server (4) if the request fulfills the iFC, wherein the application server (4) is configured to host at least one connection to the at least one end point (5),
**characterized in that** limiting a number of requests to contact the end point (5) is performed according to the iFC comprising at least one parameter specifying application server (4) destination addresses that are resolved via a Domain Name System,
thereby considering alternative application server (4) addresses altogether and limiting an invocation rate for all of them in total.

14. The method of claim 13,
wherein the control system is the system (1) according to any one of the preceding claims 1 to 12.

## Patentansprüche

1. Steuersystem (1) zur Steuerung von Anfragen, einen Endpunkt (5) eines Internetprotokoll-Multimedia-Subsystem-Netzwerks zu kontaktieren, das aufweist:
eine Empfangseinrichtung, die konfiguriert ist, Anfragen von einem Sender (2) über das Netzwerk (6) zu empfangen, einen Endpunkt (5) zu kontaktieren;
eine Steuereinrichtung, die konfiguriert ist, eine Anzahl von Anfragen, den Endpunkt (5) zu kontaktieren, gemäß anfänglichen Filterkriterien, iFC, zu begrenzen, die eine vorbestimmte Anzahl zulässiger Anfragen in einer vorbestimmten Zeitspanne T1 definieren, und
eine Übertragungseinrichtung, die konfiguriert ist, eine Anfrage an einen Anwendungsserver (4) zu übertragen, wenn die Anfrage die iFC erfüllt, wobei der Anwendungsserver (4) konfiguriert ist, mindestens eine Verbindung zu dem mindestens einen Endpunkt (5) zu hosten,
**dadurch gekennzeichnet, dass** die Steuereinrichtung (3) konfiguriert ist, eine Anzahl von Anfragen, den Endpunkt (5) zu kontaktieren, gemäß den iFC zu begrenzen, die mindestens einen Parameter aufweisen, der Zieladressen des Anwendungsservers (4) angibt, die über ein Domain-Name-System aufgelöst werden, und
wodurch insgesamt alternative Adressen des Anwendungsservers (4) berücksichtigt werden und eine Aufrufrate für alle von ihnen insgesamt begrenzt wird.

2. System (1) nach Anspruch 1,
wobei der Anwendungsserver (4) konfiguriert ist, den Zugriff auf den mindestens einen Endpunkt (5) über mindestens eine von mehreren Warteschlangen (7) zu ermöglichen,
wobei die mindestens eine Warteschlange (7) der mehreren Warteschlangen (7) von mehreren Endpunkten (5) gemeinsam genutzt wird,
wobei die iFC eine Belegungsrate des Anwendungsservers (4) definieren, und
wobei die Belegungsrate des Anwendungsservers (4) eine Anzahl von Sitzungen in der mindestens einen der mehreren Warteschlangen (7) berücksichtigt.

3. System (1) nach Anspruch 1 oder 2,
wobei in einem Fall, dass die Anzahl der Anfragen vom Sender (2) in der vorbestimmten Zeitspanne T1 die vorbestimmte Anzahl von Anfragen überschreitet, die Steuereinrichtung (3) konfiguriert ist, dem Sender (2) den Zugriff auf den Anwendungsserver (4) abzulehnen.

4. System (1) nach einem der Ansprüche 1 bis 3,
wobei in einem Fall, dass die vorbestimmte Anzahl von Anfragen in der vorbestimmten Zeitspanne T1 überschritten wird, die Steuereinrichtung (3) konfiguriert ist, eine spezielle Antwort an den Sender (2) der Anfrage zurückzusenden.

5. System (1) nach Anspruch 4,
wobei die spezielle Antwort mindestens einen Antwortcode aufweist,
wobei die Steuereinrichtung (3) konfiguriert ist, den mindestens einen Antwortcode an den Sender (2) zum Ablehnen der Anfrage zu senden, und
wobei der mindestens eine Antwortcode durch mindestens einen Parameter der iFC definiert ist.

6. System (1) nach Anspruch 5,
wobei der mindestens eine Parameter der iFC sich auf eine Trigger-Zieladresse des Anwendungsservers (4) bezieht, wobei die Trigger-Zieladresse des Anwendungsservers (4) aufgerufen wird, wenn iFC Service Point Triggers, SPTs, mit der eingehenden Anfrage vom Sender (2) übereinstimmen.

7. System (1) nach einem der Ansprüche 1 bis 6,
wobei die Steuereinrichtung (3) konfiguriert ist, den Zugriff für eine andere vorbestimmte Zeitspanne T2 abzulehnen, und
wobei die andere vorbestimmte Zeitspanne T2 gleich oder verschieden von der vorbestimmten Zeitspanne T1 ist.

8. System (1) nach einem der Ansprüche 1 bis 7,
wobei die iFC eine Aufrufzahlgrenze und/oder ein Aufruffenster und/oder eine Aufrufrate aufweisen.

9. System (1) nach einem der Ansprüche 1 bis 8,
das eine Vorläufereinrichtung aufweist, die konfiguriert ist, alle Anfragen des Senders (2) zu verwerfen oder abzulehnen,
wobei die Vorläufereinrichtung mit dem Netzwerk (6) verbunden ist.

10. System (1) nach Anspruch 9,
wobei die Vorläufereinrichtung konfiguriert ist, alle Anfragen des Senders (2), den Endpunkt (5) zu kontaktieren, für den der Sender (2) mehrere Anfragen gesendet hat, die der Anzahl von Anfragen, den Endpunkt (5) zu kontaktieren, gemäß den iFC folgen, zu verwerfen oder abzulehnen.

11. System (1) nach Anspruch 9 oder 10, wobei die Vorläufereinrichtung konfiguriert ist, alle Anfragen gemäß mindestens einem Kriterium, das durch das mindestens eine Signalisierungsinformationselement definiert ist, zu verwerfen oder abzulehnen.

12. System (1) nach Anspruch 11, wobei das mindestens eine Signalisierungsinformationselement in dem mindestens einen Antwortcode enthalten ist.

13. Verfahren zur Verwendung in einem Steuersystem zur Steuerung von Anfragen, einen Endpunkt eines Internetprotokoll-Multimedia-Subsystem-Netzwerks zu kontaktieren, das aufweist:
Empfangen von Anfragen von einem Sender (2) über das Netzwerk (6), einen Endpunkt (5) zu kontaktieren;
Begrenzen einer Anzahl von Anfragen, den Endpunkt (5) zu kontaktieren, gemäß anfänglichen Filterkriterien, iFC, die eine vorbestimmte Anzahl von erlaubten Anfragen in einer vorbestimmten Zeitspanne T1 definieren, und
Übertragen einer Anfrage an einen Anwendungsserver (4), wenn die Anfrage die iFC erfüllt, wobei der Anwendungsserver (4) konfiguriert ist, mindestens eine Verbindung zu dem mindestens einen Endpunkt (5) zu hosten,
**dadurch gekennzeichnet, dass** die Begrenzung einer Anzahl von Anfragen, den Endpunkt (5) zu kontaktieren, gemäß den iFC durchgeführt wird, die mindestens einen Parameter aufweisen, der Zieladressen des Anwendungsservers (4) angibt, die über ein Domain-Name-System aufgelöst werden,
wodurch insgesamt alternative Adressen des Anwendungsservers (4) berücksichtigt werden und eine Aufrufrate für alle von ihnen insgesamt begrenzt wird.

14. Verfahren nach Anspruch 13, wobei das Steuersystem das System (1) nach einem der vorhergehenden Ansprüche 1 bis 12 ist.

## Revendications

1. Système de commande (1) de demandes de contact avec un point d'extrémité (5) d'un réseau de sous-système multimédia de protocole Internet, comprenant :
une unité de réception configurée pour recevoir des demandes d'un expéditeur (2) via le réseau (6) afin de contacter un point d'extrémité (5) ;
une unité de commande configurée pour limiter le nombre de demandes de contact avec le point d'extrémité (5) en fonction de critères de filtrage initiaux, iFC, définissant un nombre prédéterminé de demandes autorisées pendant une période de temps T1 prédéterminée, et
une unité de transmission configurée pour transmettre une demande à un serveur d'application (4) si la demande satisfait aux iFC, le serveur d'application (4) étant configuré pour héberger au moins une connexion audit au moins un point d'extrémité (5),
**caractérisé en ce que** l'unité de commande (3) est configurée pour limiter un nombre de demandes de contact avec le point d'extrémité (5) en fonction des iFC comprenant au moins un paramètre spécifiant des adresses de destination du serveur d'application (4) qui sont résolues via un système de noms de domaine,
en prenant ainsi en compte d'autres adresses de serveurs d'application (4) dans leur ensemble et en limitant un taux d'invocation pour la totalité d'entre elles.

2. Système (1) selon la revendication 1,
où le serveur d'application (4) est configuré pour fournir un accès audit au moins un point d'extrémité (5) via au moins une file d'attente (7) parmi une pluralité de files d'attente, où ladite au moins une file d'attente (7) de la pluralité de files d'attente (7) est partagée par une pluralité de points d'extrémité (5),
où les iFC définit un taux d'occupation du serveur d'application (4), et
où le taux d'occupation du serveur d'application (4) prend en compte un nombre de sessions dans ladite au moins une des files d'attente (7).

3. Système (1) selon la revendication 1 ou la revendication 2,
où, dans un cas où le nombre de demandes provenant de l'expéditeur (2) pendant la période de temps prédéterminée T1 excède le nombre prédéterminé de demandes, l'unité de commande (3) est configurée pour refuser l'accès de l'expéditeur (2) au serveur d'application (4).

4. Système (1) selon les revendications 1 à 3,
où, dans un cas de dépassement du nombre prédéterminé de demandes pendant la période de temps prédéterminée T1, l'unité de commande (3) est configurée pour envoyer une réponse spéciale à l'expéditeur (2) de la demande.

5. Système (1) selon la revendication 4,
où la réponse spéciale comprend au moins un code de réponse,
où l'unité de commande (3) est configurée pour envoyer ledit au moins un code de réponse à l'expéditeur (2) pour rejeter la demande, et
où ledit au moins un code de réponse est défini par au moins un paramètre des iFC.

6. Système (1) selon la revendication 5,
où ledit au moins un paramètre des iFC se rapporte à une adresse cible de déclenchement du serveur d'application (4), ladite adresse cible de déclenchement du serveur d'application (4) étant invoquée lorsque des déclencheurs de points de service iFC, SPT, correspondent à la demande entrante de l'expéditeur (2).

7. Système (1) selon l'une des revendications 1 à 6,
où l'unité de commande (3) est configurée pour refuser l'accès pendant une autre période de temps T2 prédéterminée, et
où l'autre période de temps prédéterminée T2 est égale à la période de temps prédéterminée T1 ou différente de celle-ci.

8. Système (1) selon l'une des revendications 1 à 7,
où les iFC comprennent une limite de nombre d'invocations et/ou une fenêtre d'invocations et/ou un taux d'invocations.

9. Système (1) selon l'une des revendications 1 à 8,
comprenant une unité précurseuse configurée pour abandonner ou rejeter toutes les demandes de l'expéditeur (2),
ladite unité précurseuse étant connectée au réseau (6).

10. Système (1) selon la revendication 9,
où l'unité précurseuse est configurée pour abandonner ou rejeter toutes les demandes de l'expéditeur (2) de contacter le point d'extrémité (5) pour lequel l'expéditeur (2) a envoyé une pluralité de demandes excédant le nombre de demandes de contacter le point d'extrémité (5) en fonction des iFC.

11. Système (1) selon la revendication 9 ou la revendication 10, où l'unité précurseuse est configurée pour abandonner ou pour rejeter toutes les demandes en fonction d'au moins un critère défini par ledit au moins un élément d'information de signalisation.

12. Système (1) selon la revendication 11, où ledit au moins un élément d'information de signalisation est compris dans ledit au moins un code de réponse.

13. Procédé destiné à être utilisé dans un système de commande des demandes de contact avec un point d'extrémité d'un réseau de sous-système multimédia à protocole Internet, comprenant :
la réception de demandes d'un expéditeur (2) via le réseau (6) pour contacter un point d'extrémité (5) ;
la limitation du nombre de demandes de contact avec le point d'extrémité (5) en fonction de critères de filtrage initiaux, iFC, définissant un nombre prédéterminé de demandes autorisées au cours d'une période T1 prédéterminée, et
la transmission d'une demande à un serveur d'application (4) si la demande satisfait aux iFC, ledit serveur d'application (4) étant configuré pour héberger au moins une connexion audit au moins un point d'extrémité (5),
**caractérisé en ce que** la limitation du nombre de demandes de contact avec le point d'extrémité (5) est exécutée en fonction des iFC comprenant au moins un paramètre spécifiant des adresses de destination du serveur d'application (4) qui sont résolues via un système de noms de domaine,
en prenant ainsi en compte d'autres adresses de serveurs d'application (4) dans leur ensemble et en limitant un taux d'invocation pour la totalité d'entre elles.

14. Procédé selon la revendication 13, où le système de commande est le système (1) selon l'une des revendications 1 à 12.
